(19) Europäisches Patentamt
European Patent Office
Office européen des brevets

(11) Veröffentlichungsnummer : **0 537 220 B1**

# (12) EUROPÄISCHE PATENTSCHRIFT

(45) Veröffentlichungstag der Patentschrift :
**27.07.94 Patentblatt 94/30**

(51) Int. Cl.[5] : **C09B 62/513,** D06P 1/384

(21) Anmeldenummer : **91911918.0**

(22) Anmeldetag : **27.06.91**

(86) Internationale Anmeldenummer :
**PCT/EP91/01208**

(87) Internationale Veröffentlichungsnummer :
**WO 92/01021 23.01.92 Gazette 92/03**

## (54) DISAZOVERBINDUNGEN, VERFAHREN ZU DEREN HERSTELLUNG UND IHRE VERWENDUNG ALS FARBSTOFFE.

(30) Priorität : **03.07.90 DE 4021067**

(43) Veröffentlichungstag der Anmeldung :
**21.04.93 Patentblatt 93/16**

(45) Bekanntmachung des Hinweises auf die Patenterteilung :
**27.07.94 Patentblatt 94/30**

(84) Benannte Vertragsstaaten :
**BE CH DE ES FR GB IT LI NL**

(56) Entgegenhaltungen :
**EP-A- 0 040 806**
**FR-A- 2 066 070**
**GB-A- 2 007 698**

(73) Patentinhaber : **HOECHST AKTIENGESELLSCHAFT**
**D-65926 Frankfurt (DE)**

(72) Erfinder : **SPRINGER, Hartmut**
**Am Erdbeerstein 27**
**D-6240 Königstein/Taunus (DE)**
Erfinder : **GLEISSNER, Rolf**
**Mundenheimer Strasse 140**
**W-6700 Ludwigshafen (DE)**

**EP 0 537 220 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung liegt auf dem technischen Gebiet der faserreaktiven Farbstoffe.

Faserreaktive Azofarbstoffe, die zwei Reste von Azochromophoren enthalten, welche jeweils über eine Aminogruppe durch einen Triazinrest miteinander verbunden sind, sind beispielsweise aus den US-Patentschriften 4 485 041 und 4 806 127, aus der Britischen Patentschrift 2 007 698, aus der Deutschen Offenlegungschrift 3 320 972 und aus der Japanischen Patentbekanntmachung Sho 62-132 968 bekannt. Gestiegene Anforderungen an die Qualität der Färbungen und an die Wirtschaftlichkeit des Färbprozesses haben es jedoch erforderlich gemacht, verbesserte Farbstoffe zu entwickeln. Denn gerade zum Färben von Cellulosefasermaterialien, wie Baumwolle, nach dem Klotz-Kaltverweil-Verfahren werden Farbstoffe benötigt, die gut löslich sind und die bei den niedrigen Färbe- und Fixiertemperaturen eine hohe Reaktivität aufweisen. Sie sollen einen hohen Fixiergrad besitzen, um sowohl ökonomisch als auch ökologisch mit hohem Vorteil in die Färbeprozesse eingesetzt werden zu können. Darüber hinaus sollen die erhaltenen Färbungen möglichst ätzbar sein, um beispielsweise als Fondfärbung beim Ätzdruck dienen zu können.

Mit der vorliegenden Erfindung wurde diese Aufgabe durch Auffindung der wasserlöslichen Disazofarbstoffe der nachstehend angegebenen und definierten allgemeinen Formel (1), welche sehr gute faserreaktive, färberische Eigenschaften besitzen, gelöst.

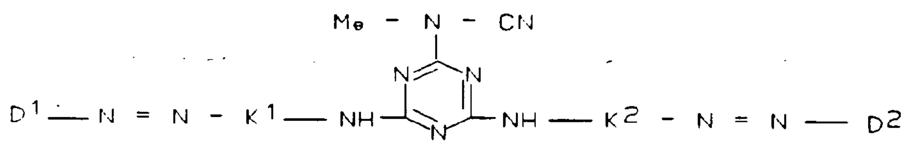

(1)

In Formel (1) bedeuten:

Me ist Wasserstoff oder ein Alkalimetall, wie Natrium, Kalium oder Lithium;

$K^1$ ist ein Rest der allgemeinen Formel (2a)

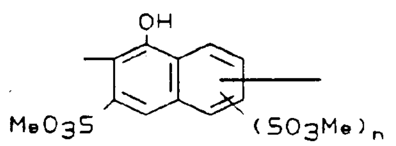

(2a)

in welcher

Me eine der oben angegebenen Bedeutungen hat und

n die Zahl Null oder 1 bedeutet (wobei im Falle von n gleich Null diese Gruppe Wasserstoff bedeutet);

$K^2$ ist ein Rest der allgemeinen Formel (2b)

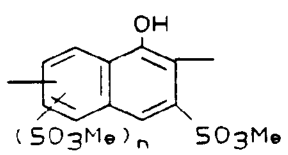

(2b)

in welcher Me und n eine der oben genannten Bedeutungen besitzt;

$D^1$ und $D^2$ sind unabhängig voneinander jedes eine Gruppe der allgemeinen Formel (3a), (3b) oder (3c)

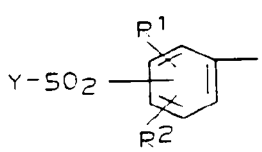

(3a)

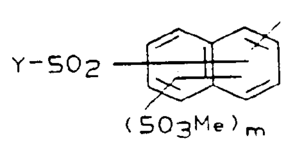

(3b)

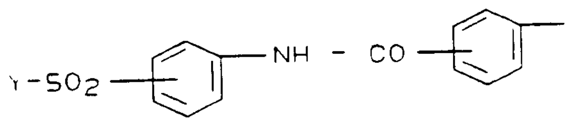
(3c)

in welchen

Me eine der oben genannten Bedeutungen besitzt,

$R^1$ Wasserstoff, Alkyl von 1 bis 4 C-Atomen, wie Ethyl und insbesondere Methyl, das durch Sulfo, Carboxy oder Sulfato substituiert sein kann, Alkoxy von 1 bis 4 C-Atomen, wie Ethoxy und insbesondere Methoxy, das durch Sulfo, Carboxy oder Sulfato substituiert sein kann, Chlor, Brom, Hydroxy, Cyano, Carboxy oder Sulfo ist, vorzugsweise Wasserstoff, Methyl, Methoxy oder Ethoxy ist,

$R^2$ Wasserstoff, Alkyl von 1 bis 4 C-Atömen, wie Ethyl und insbesondere Methyl, oder Alkoxy von 1 bis 4 C-Atomen, wie Ethoxy und insbesonder Methoxy, ist, bevorzugt Wasserstoff oder Methoxy ist,

Y Vinyl oder Ethyl ist, das in β-Stellung einen Substituenten enthält, der durch Alkali unter Bildung der Vinylgruppe eliminierbar ist, und

m die Zahl Null, 1 oder 2 ist (wobei im Falle von m gleich Null diese Gruppe Wasserstoff bedeutet).

In Formel (3a) steht die Gruppe Y-$SO_2$- bevorzugt in meta- oder para-Stellung zur freien, mit der Azogruppe verbundenen Bindung an den Benzolring gebunden, und in Formel (3c) steht diese Gruppe bevorzugt in meta- oder para-Stellung zur Aminocarbonylgruppe- an den Benzolring gebunden. In Formel (3b) steht die freie Bindung, die zur Azogruppe führt, bevorzugt in 2-Stellung an den Naphthalinrest.

Die einzelnen Formelglieder können zueinander im Rahmen ihrer Bedeutung gleiche oder verschiedene Bedeutungen besitzen.

Substituenten, die in β-Stellung der Ethylgruppe des Formelgliedes Y stehen und die alkalisch eliminierbar sind, sind beispielsweise Alkanoyloxygruppen von 2 bis 5 C-Atomen, wie die Acetyloxygruppen, Aroyloxygruppen, wie die Benzoyloxy-, Sulfobenzoyloxy- oder Carboxybenzoyloxy-Gruppe, Alkyl- und Dialkylaminogruppen mit Alkylresten von 1 bis 4 C-Atomen, wie insbesondere die Dimethylamino- und die Diethylaminogruppe, Trialkylammoniumgruppen mit Alkylresten von 1 bis 4 C-Atomen, wie die Trimethylammoniumgruppe, wobei deren Anion ein übliches, farbloses Anion ist, wie das Chlorid-, Hydrogensulfat- oder Sulfatanion, Alkylsulfonyloxygruppen von 1 bis 4 C-Atomen, wie die Methylsulfonyloxy-Gruppe, das Fluor- oder Bromatom und insbesondere eine Phosphato-, Thiosulfato- und Sulfatogruppe. Bevorzugt ist die Gruppe Y-$SO_2$- die Vinylsulfonylgruppe oder die β-Chlorethylsulfonyl-, β-Thiosulfatoethylsulfonyl oder die β-Sulfatoethylsulfonyl-Gruppe, insbesondere bevorzugt die β-Sulfatoethylsulfonyl-Gruppe.

Sulfo-, Carboxy-, Sulfato-, Thiosulfato- und Phosphatogruppen sind Gruppen der allgemeinen Formel -$SO_3Me$ , -COOMe , -$OSO_3Me$ , -S-$SO_3Me$ bzw. -$OPO_3Me_2$ , in welchen Me eine der oben genannten Bedeutungen besitzt.

Die Reste $D^1$ und $D^2$ sind beispielsweise:

2-(β-Sulfatoethylsulfonyl)-phenyl,
3-(β-Sulfatoethylsulfonyl)-phenyl,
4-(β-Sulfatoethylsulfonyl)-phenyl,
2-Carboxy-5-(β-sulfatoethylsulfonyl)-phenyl,
2-Chlor-3-(β-sulfatoethylsulfonyl)-phenyl,
2-Chlor-4-(β-sulfatoethylsulfonyl)-phenyl,
2-Ethoxy-4-(β-sulfaotethylsulfonyl)-phenyl,
2-Ethoxy-5-(β-sulfatoethylsulfonyl)-phenyl,
2-Ethyl-4-(β-sulfatoethylsulfonyl)-phenyl,
2-Methoxy-5-(β-sulfatoethylsulfonyl)-phenyl,
2,4-Diethoxy-5-(β-sulfatoethylsulfonyl)-phenyl,
2,4-Dimethoxy-5-(β-sulfatoethylsulfonyl)-phenyl,
2,5-Dimethoxy-4-(β-sulfatoethylsulfonyl)-phenyl,
2-Methoxy-5-methyl-4-(β-sulfatoethylsulfonyl)-phenyl,
2-(β-Thiosulfatoethylsulfonyl)-phenyl,
3-(β-Thiosulfatoethylsulfonyl)-phenyl,
4-(β-Thiosulfatoethylsulfonyl)-phenyl,
2-Methoxy-5-(β-thiosulfatoethylsulfonyl)-phenyl,
2-Sulfo-4-(β-phosphatoethylsulfonyl)-phenyl,
2-Sulfo-4-(vinylsulfonyl)-phenyl,

2-Chlor-4-(β-chlorethylsulfonyl)-phenyl,
2-Chlor-5-(β-chlorethylsulfonyl)-phenyl,
3-(β-Acetyloxy-ethylsulfonyl)-phenyl,
4-(β-Acetyloxy-ethylsulfonyl)-phenyl,
2-Hydroxy-5-(β-sulfatoethylsulfonyl)-phenyl,
2-Methoxy-5-[β-(N-methyl-tauryl)-ethylsulfonyl]-phenyl,
5-(β-Sulfatoethylsulfonyl)-naphth-2-yl,
6-(β-Sulfatoethylsulfonyl)-naphth-2-yl,
7-(β-Sulfatoethylsulfonyl)-naphth-2-yl,
8-(β-Sulfatoethylsulfonyl)-naphth-2-yl,
6-(β-Sulfatoethylsulfonyl)-1-sulfo-naphth-2-yl,
5-(β-Sulfatoethylsulfonyl)-1-sulfo-naphth-2-yl,
8-(β-Sulfatoethylsulfonyl)-6-sulfo-naphth-2-yl,
2-Brom-3-(β-sulfatoethylsulfonyl)-phenyl und
2-Brom-4-(β-sulfatoethylsulfonyl)-phenyl.

Bevorzugt stellen die Reste $D^1$ und $D^2$ Gruppen gleicher Konstitution dar.

Bevorzugt ist der Rest $-K^1-NH-$ ein Rest der allgemeinen Formel (4a), (4b) oder (4c)

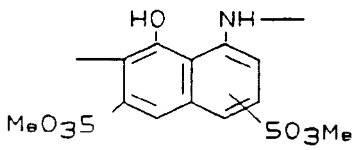

(4a)

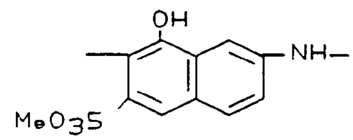

(4b)

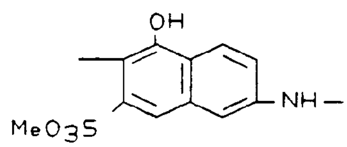

(4c)

mit Me der oben genannten Bedeutung, und bevorzugt ist $-NH-K^2-$ ein Rest der allgemeinen Formel (5a), (5b) oder (5c)

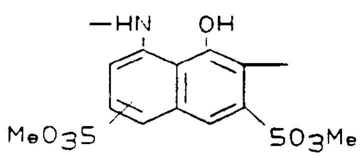

(5a)

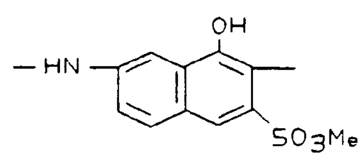

(5b)

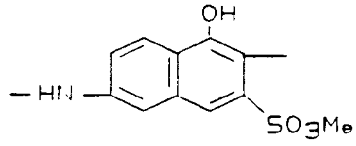

(5c)

mit Me der oben genannten Bedeutung, wobei in den Formeln (4a) und (5a) die eine Gruppe $-SO_3Me$ jeweils in meta- oder para-Stellung zur Aminogruppe an den Naphthalinrest gebunden ist. Insbesondere bevorzugt sind die Reste $-K^1-NH-$ und $-NH-K^2-$ ein Rest der allgemeinen Formel (4a) bzw. (5a), wobei die eine Gruppe $-SO_3Me$ wiederum bevorzugt in meta-Stellung zur Aminogruppe an den Naphthalinrest gebunden ist.

Die vorliegende Erfindung betrifft weiterhin ein Verfahren zur Herstellung der Disazoverbindungen der allgemeinen Formel (1), das dadurch gekennzeichnet ist, daß man eine Verbindung der allgemeinen Formel (6)

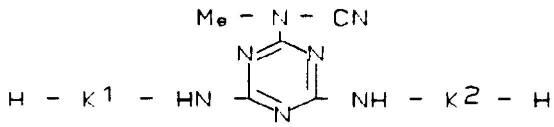

(6)

in welcher $K^1$, $K^2$ und Me eine der oben genannten Bedeutungen haben, in beliebiger Reihenfolge oder gleichzeitig mit den Diazoniumverbindungen der aromatischen Amine der allgemeinen Formeln $D^1$-$NH_2$ und $D^2$-$NH_2$ mit $D^1$ und $D^2$ eine der oben genannten Bedeutungen, wobei $D^1$ und $D^2$ zueinander gleiche oder voneinander verschiedene Bedeutungen besitzen können, in äquivalenter Menge kuppelt.

Bei dem erfindungsgemäßen Verfahren setzt man, sofern $D^1$ und $D^2$ gleich sind, 2 Moläquivalente des aromatischen Amins als Diazokomponente in die Kupplungsreaktion ein. Sofern $D^1$ und $D^2$ voneinander verschieden sind, können deren Diazoniumsalze in Mischung gleichzeitig mit der Verbindung der allgemeinen Formel (6) gekuppelt werden, oder man setzt das Diazoniumsalz des einen Amins zunächst mit der Verbindung (6) um und sodann das Diazoniumsalz des zweiten Amins mit der so gebildeten Monoazoverbindung zur Disazoverbindung der Formel (1) um.

Die Diazotierung der Amine $D^1$-$NH_2$ und $D^2$-$NH_2$ erfolgt in üblicher Weise, so beispielsweise in wäßrigem Medium mittels salpetriger Säure (beispielsweise mittels Natriumnitrit in wäßrig-mineralsaurer, wie salz- oder schwefelsaurer Lösung) bei einer Temperatur zwischen -5°C und +15°C und bei einem pH-Wert von unterhalb 2. Erfindungsgemäß wird die Kupplungsreaktion in wäßrigem Medium bei einer Temperatur zwischen 5 und 40°C, bevorzugt zwischen 10 und 25°C, und bei einem pH-Wert zwischen 3,5 und 7,5, bevorzugt zwischen 4 und 6, durchgeführt.

Die erfindungsgemäßen Disazoverbindungen der allgemeinen Formel (1) können erfindungsgemäß auch in der Weise hergestellt werden, daß man eine Verbindung der allgemeinen Formel (7)

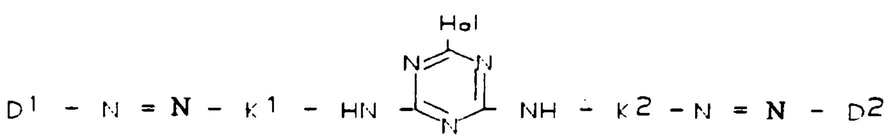

(7)

in welcher $D^1$, $D^2$, $K^1$ und $K^2$ eine der oben genannten Bedeutungen besitzen und Hal für Halogen, wie Fluor oder insbesondere Chlor, steht, mit Cyanamid oder einem Alkalimetallsalz des Cyanamids umsetzt. Diese Umsetzung erfolgt bevorzugt im wäßrigen Medium bei einem pH-Wert zwischen 8 und 2, bevorzugt zwischen 4 und 2, und bei einer Temperatur zwischen 40 und 95 °C, bevorzugt zwischen 60 und 95°C.

Die Ausgangsverbindungen der allgemeinen Formel (7) sind beispielsweise aus der anfangs genannten US-Patentschrift 4 485 041 und der Britischen Patentschrift 2 007 698 bekannt.

Die Ausgangsverbindungen der allgemeinen Formel (6) erhält man durch Umsetzung eines Trihalogen-s-triazins, wie Cyanurfluorid und insbesondere Cyanurchlorid, mit Cyanamid oder einem Alkalimetallsalz des Cyanamids bei einem pH-Wert zwischen 5 und 10, bevorzugt zwischen 7 und 9, und bei einer Temperatur zwischen -10°C und +20°C, bevorzugt zwischen -5°C und +5°C. Die Umsetzung kann in wäßrig-organischem Medium oder in wäßrigem Medium erfolgen. Organische Lösemittel, die in einem wäßrig-organischen Medium verwendet werden, sind alle die, die sich gegenüber den Reaktanten chemisch inert verhalten, wie beispielsweise Chlorbenzol oder Aceton. Das so erhaltene Cyanamido-dihalogeno-s-triazin wird sodann mit einer Verbindung der allgemeinen Formel H-$K^1$-$NH_2$ und H-$K^2$-$NH_2$ mit $K^1$ und $K^2$ der oben genannten Bedeutung, wobei $K^1$ und $K^2$ zueinander gleiche oder voneinander verschiedene Bedeutungen besitzen können, in äquivalenter Menge umgesetzt. Die erste Kondensationsreaktion erfolgt bei einer Temperatur zwischen -5°C und +40°C, bevorzugt zwischen 0°C und 20°C, und bei einem pH-Wert zwischen 2 und 7, bevorzugt zwischen 3 und 5, wobei auch diese Reaktionen in wäßrig-organischen Medium obengenannter Art durchgeführt werden können, bevorzugt jedoch in wäßrigem Medium erfolgen. Die zweite Kondensationsreaktion erfolgt bei einem pH-Wert zwischen 2 und 7, bevorzugt zwischen 3 und 5, und bei einer Temperatur zwischen 60 und 90°C.

Ebenso können die Ausgangsverbindungen der allgemeinen Formel (6) hergestellt werden, indem man ebenfalls aus der oben erwähnten US-PS 4 485 041 bzw. GB-PS 2 007 698 bekannte Ausgangsverbindungen entsprechend der allgemeinen Formel (8)

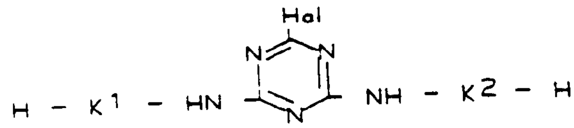

(8)

mit $K^1$, $K^2$ und Hal der oben genannten Bedeutung mit Cyanamid oder einem Alkalimetallsalz des Cyanamids analog den oben für die Herstellung der Verbindungen der allgemeinen Formel (7) angegebenen Bedingungen umsetzt.

Die erfindungsgemäßen Disazoverbindungen der allgemeinen Formel (1) können bezüglich ihrer faserreaktiven Reste Y-$SO_2$- analog bekannten Verfahrensweisen in Verbindungen mit ansonsten gleicher Konstitution, jedoch mit einer Gruppierung, in welcher Y eine andere Gruppe darstellt, übergeführt werden, so beispielsweise ausgehend von den Verbindungen mit einer β-Sulfatoethylsulfonyl oder β-Chlorethylsulfonyl-Gruppe in solche, in welchen Y die Vinylgruppe bedeutet, und ausgehend von Verbindungen mit der β-Chlorethylsulfonyl oder der Vinylsulfonyl-Gruppe in solche, in welchen Y die β-Thiosulfatoethyl-Gruppe bedeutet. So lassen sich beispielsweise die Vinylsulfonyl-Verbindungen aus ihren entsprechenden β-Chlorethylsulfonyl-Verbindungen oder ihren Verbindungen, in welchen Y die Ethylgruppe ist, die in β-Stellung die Estergruppe einer organischen oder anorganischen Säure als Substituenten enthält, wie beispielsweise die Sulfato- oder die Acetyloxygruppe, in der Weise herstellen, daß man ein Alkali in wäßrigem Medium bei einem pH-Wert zwischen 10 und 12 und bei einer Temperatur zwischen 20 und 50°C und, abhängig von der Temperatur, während 10 Minuten bis 3 Stunden auf diese Verbindungen einwirken läßt, so bspw. bei einer Temperatur von 50°C während 10 bis 20 Minuten oder bei einer Temperatur von 25°C während zwei bis drei Stunden, und aus der β-Chlorethylsulfonyl-Verbindung oder der Vinylsulfonyl-Verbindung läßt sich bei einem pH-Wert zwischen 4 und 9 und einer Temperatur zwischen 20 und 60°C durch Umsetzung mit Natriumthiosulfat die entsprechende β-Thiosulfatoethylsulfonyl-Verbindung herstellen.

Die Abscheidung und Isolierung der erfindungsgemäß hergestellten Disazoverbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei der Syntheselösung eine Puffersubstanz zugefügt werden kann.

Die erfindungsgemäßen Disazoverbindungen der allgemeinen Formel (1) - im nachfolgenden Verbindungen (1) genannt - haben faserreaktive Eigenschaften und besitzen sehr gute Farbstoffeigenschaften. Sie können deshalb zum Färben (einschließlich Bedrucken) von hydroxygruppenhaltigen und/oder carbonamidgruppenhaltigen Fasermaterialien verwendet werden. Auch können die bei der Synthese der Verbindungen (1) anfallenden Lösungen, gegebenenfalls nach Zusatz einer Puffersubstanz und gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemäßen Verbindungen (1) zum Färben (einschließlich Bedrucken) von hydroxy- und/oder carbonamidgruppenhaltigen Fasermaterialien bzw. Verfahren zu deren Anwendung auf diesen Substraten. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane in Form von Fasern, beispielsweise Wolle und andere Tierhaare, Seide, Leder, Polyamid-6,6, Polyamid-6, Polyamid-11 und Polyamid-4.

Die Verbindungen (1) lassen sich, gemäß der erfindungsgemäßen Anwendung, auf den genannten Substraten nach den für wasserlösliche Farbstoffe, insbesondere faserreaktive Farbstoffe, bekannten Anwendungstechniken applizieren und fixieren, so beispielsweise, indem man die Verbindung (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert. Solche Färbe- und Fixierweisen sind sowohl in der Fachliteratur als auch in der Patentliteratur zahlreich beschrieben, wie beispielsweise in der Europäischen Patentanmeldungs-Veröffentlichung Nr. 0 181 585A. Wegen ihrer guten Wasserlöslichkeit eignen sie sich auch besonders für das Klotz-Kaltverweil-Verfahren.

Mit den Verbindungen (1) werden sowohl auf carbonamidgruppenhaltigen Materialien, wie insbesondere auf Wolle, als auch auf hydroxygruppenhaltigem Material, wie insbesondere Cellulosefasermaterial, gelbe bis blaustichig rote Färbungen und Drucke mit guten Echtheitseigenschaften, wie guten Plissier-, Bügel- und Reibechtheiten und insbesondere einer guten Lichtechtheit und guten Naßechtheitseigenschaften, erhalten, von denen insbesondere die Chlorbadewasser- und Schweißechtheiten hervorgehoben werden können. Weiterhin sind die Verbindungen (1) zum Einsatz für Fondfärbungen geeignet, da sich die mit den Verbindungen (1) erhältlichen Färbungen alkalisch und/oder reduktiv ätzen lassen und somit gezielt entfärbt werden können. Ebenso eignen sich die Verbindungen (1) zum Einsatz für Fondfärbungen mit nachfolgender alkalischer Buntätze, beispielsweise unter Verwendung von Küpenfarbstoffen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

Die im sichtbaren Bereich angegebenen Absorptionsmaxima ($\lambda_{max}$-Werte) wurden aus wäßriger Lösung der Alkalimetallsalze bestimmt.

**Beispiel 1**

a) In einem Gemisch aus 1000 Teilen Eis und Wasser suspendiert man in Gegenwart eines handelsüblichen Dispergiermittels 184 Teile Cyanurchlorid, gibt man dann 42 Teile Cyanamid hinzu und führt die Umsetzung bei einer Temperatur von 0 bis 5°C und unter Einhaltung eines pH-Wertes zwischen 7,5 und 8 zu Ende. Sodann gibt man 320 Teile 1-Amino-8-naphthol-3,6-disulfonsäure hinzu; bei der sich daran anschließenden Umsetzung erniedrigt sich der pH-Wert, und er wird sodann bei 2,0 unter gleichzeitiger langsamer Steigerung der Temperatur auf 30°C gehalten. Nach Beendigung dieser Umsetzung gibt man weitere 310 Teile 1-Amino-8-naphthol-3,6-disulfonsäure hinzu und führt die dritte Kondensationsreaktion bei 80°C und bei einem pH-Wert zwischen 5,0 und 5,5 zu Ende. Man kühlt den Reaktionsansatz auf etwa 50°C ab, isoliert die ausgefallene Verbindung durch Filtration, wäscht den Filterrückstand mit Wasser und trocknet ihn.

Es wird das Alkalimetallsalz (Natriumsalz) der Verbindung (A)

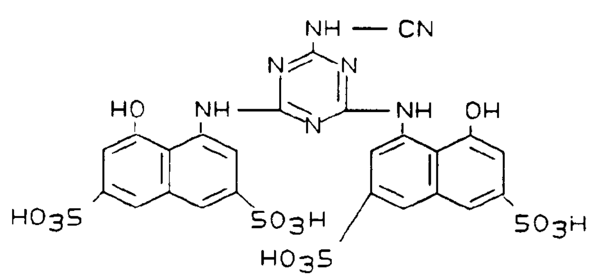

(A)

als elektrolythaltiges (natriumchloridhaltiges) Pulver erhalten. Das Produkt zeigt in KBr eine IR-Bande bei 2193 $cm^{-1}$.

b) Eine Suspension von 79,1 Teilen des Natriumsalz der Verbindung der Formel (A) in 200 Teilen Wasser gibt man zu einer in üblicher Weise hergestellten sauren, wäßrigen Diazoniumsalzsuspension von 56 Teilen 4-(β-Sulfatoethylsulfonyl)-anilin und führt die Kupplungsreaktion bei einem pH-Wert von 4,5 und bei einer Temperatur von 15 bis 20°C durch. Die Syntheselösung wird anschließend geklärt, und die erfindungsgemäße Disazoverbindung mittels Kaliumchlorid ausgefällt und isoliert.

Man erhält die erfindungsgemäße Verbindung als Alkalimetallsalz (vorwiegend Kaliumsalz). Sie besitzt, in Form der freien Säure, die Formel

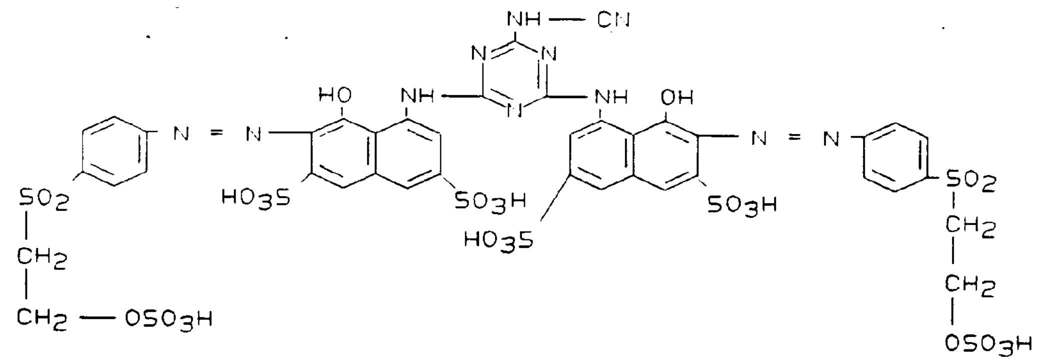

($\lambda_{max}$ = 530 nm).

Die erfindungsgemäße Disazoverbindung zeigt sehr gute faserreaktive Farbstoffeigenschaften und liefert auf den in der Beschreibung genannten Materialien, insbesondere Cellulosefasermaterialien, nach den in der Technik üblichen Anwendungs- und Fixiermethoden für faserreaktive Farbstoffe leuchtend rote, farbstarke Färbungen mit guten Echtheitseigenschaften, von denen insbesondere die alkalische Schweißlichtechtheit und die Chlorwasserechtheit hervorgehoben werden können.

**Beispiel 2**

Man gibt langsam eine auf üblichem Wege hergestellte saure, wäßrige Diazoniumsalzlösung von 41,1 Teilen 6-(β-Sulfatoethylsulfonyl)-2-amino-naphthalin-1-sulfonsäure zu einer Suspension von 39,4 Teilen des Natriumsalzes der Verbindung der Formel (A) in 200 Teilen Wasser und führt die Kupplungsreaktion unter Einhaltung eines pH-Wertes von 4,5 und einer Temperatur von 15 bis 20°C durch. Die Syntheselösung wird nach vollendeter Kupplungsreaktion geklärt, und die erfindungsgemäße Disazoverbindung wird mittels Natriumchlorid ausgesalzen und isoliert.

Man erhält das Alkalimetallsalz (Natriumsalz) der Disazoverbindung der Formel

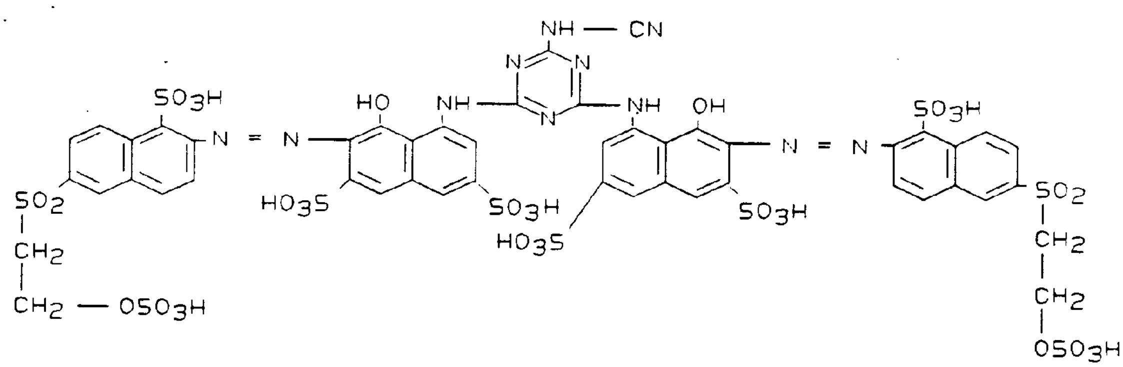

($\lambda_{max}$= 503 nm)

als elektrolythaltiges (natriumchloridhaltiges) Pulver. Die erfindungsgemäße Disazoverbindung besitzt sehr gute faserreaktive Farbstoffeigenschaften und liefert nach dem in der Technik bekannten Anwendungsmethoden farbstarke, echte, blaustichig rote Färbungen und Drucke mit guten Echtheitseigenschaften, von denen insbesondere die Chlorechtheiten hervorgehoben werden können.

**Beispiel 3**

Man setzt zunächst 18,4 Teile Cyanurchlorid analog den Angaben des Beispieles la) mit 4,2 Teilen Cyanamid um und gibt danach eine Lösung des Lithiumsalzes von 60 Teilen 1-Amino-8-naphthol-4,6-disulfonsäure in 200 Teilen Wasser hinzu. Man führt die beiden Kondensationsreaktionen zunächst bei 20°C, später unter Erhöhung der Temperatur bei 90°C durch und hält mittels einer wäßrigen Lithiumhydroxidlösung den pH-Wert bei 7,0. Nach Beendigung der Umsetzung (welche dünnschichtchromatographisch kontrollierbar ist) gibt man

zu dem Ansatz eine auf üblichem Wege hergestellte wäßrige, saure Diazoniumsalzsuspension von 52,2 Teilen 4-(β-Sulfatoethylsulfonyl)-anilin und führt die Kupplungsreaktionen unter Einhaltung eines pH-Wertes von 4,5 bei etwa 20°C durch. Die Syntheselösung wird anschließend geklärt und das Filtrat eingedampft.

Man erhält das erfindungsgemäße Alkalimetallsalz (Natriumsalz) der Disazoverbindung der Formel

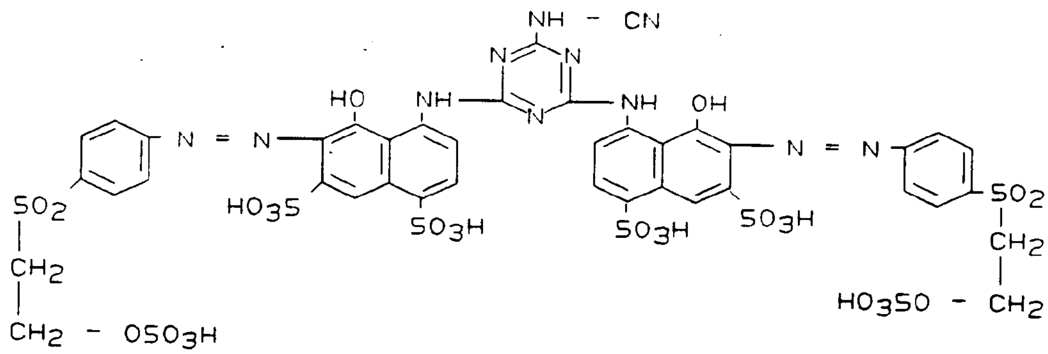

($\lambda_{max}$ = 505 nm)
in Form eines elektrolythaltigen (vorwiegend natriumchloridhaltigen) Pulvers. Die erfindungsgemäße Disazoverbindung zeigt sehr gute faserreaktive Farbstoffeigenschaften und liefert nach den für faserreaktive Farbstoffe üblichen Anwendungsmethoden, farbstarke, echte, leuchtend rote Färbungen und Drucke mit guten Echtheitseigenschaften.

**Beispiel 4**

Zur Herstellung einer erfindungsgemäßen Disazoverbindung verfährt man gemäß der Verfahrensweise des Beispieles 3, setzt jedoch an Stelle der 1-Amino-8-naphthol-4,6-disulfonsäure als eine der Ausgangsverbindungen die äquivalente Menge an 2-Amino-8-napthol-6-sulfonsäure ein. Man erhält das Alkalimetallsalz der Verbindung der Formel

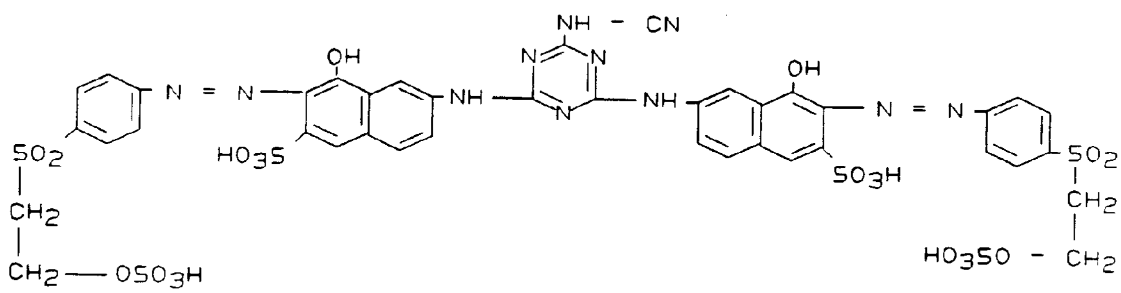

($\lambda_{max}$ = 495 nm)
die ebenfalls faserreaktive Farbstoffeigenschaften besitzt und die in der Beschreibung genannten Materialien, insbesondere Cellulosefasermaterialien, wie Baumwolle, nach den üblichen Anwendungsmethoden in farbstarken, orangeroten, echten Tönen färbt.

**Beispiel 5**

Man setzt zunächst gemäß den Angaben des Beispieles la) 18,4 Teile Cyanurchlorid mit 4,2 Teilen Cyanamid und 30,0 Teilen 1-Amino-8-naphthol-3,6-disulfonsäure um. Nach Herstellung dieses Dikondensationsproduktes gibt man eine neutrale Lösung von 31,0 Teilen 1-Amino-8-naphthol-4,6-disulfonsäure in 200 Teilen Wasser hinzu und führt die dritte Kondensationsreaktion bei einem pH-Wert von 6,0 und einer Temperatur von 80°C durch. Danach führt man analog dem Beispiel 1b) die Kupplungsreaktion nach Zusatz einer auf üblichem Wege hergestellten wäßrigen, sauren Diazoniumsalzsuspension von 52,2 Teilen 4-(β-Sulfatoethylsulfonyl)-anilin durch, klärt die Syntheselösung und isoliert die erfindungsgemäße Disazoverbindung der Formel

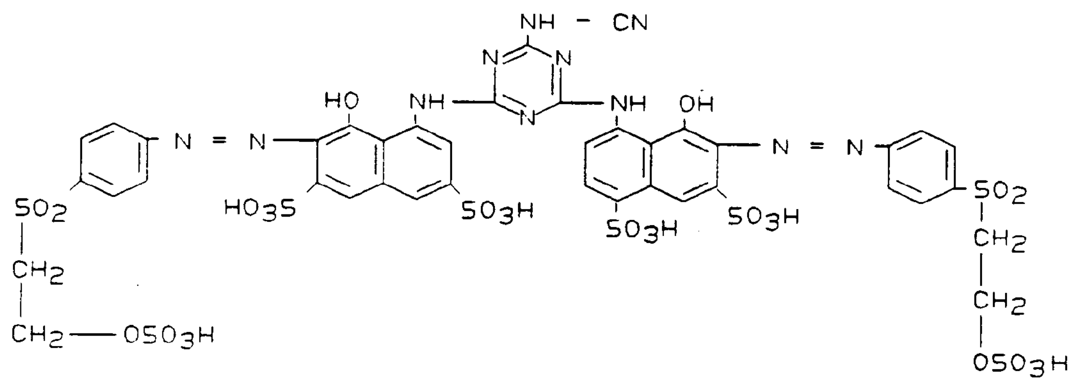

($\lambda_{max}$ = 520 nm)
in Form des Alkalimetallsalzes als elektrolythaltiges Pulver durch Eindampfen des Filtrates.

Sie färbt als Farbstoff mit faserreaktiven Eigenschaften insbesondere Cellulosefasermaterialien, wie Baumwolle, in farbstarken roten Tönen mit guten Echtheitseigenschaften.

**Beispiele 6 bis 19**

In den nachfolgenden Tabellenbeispielen sind weitere erfindungsgemäße Disazoverbindungen mit Hilfe der allgemeinen Formel (B)

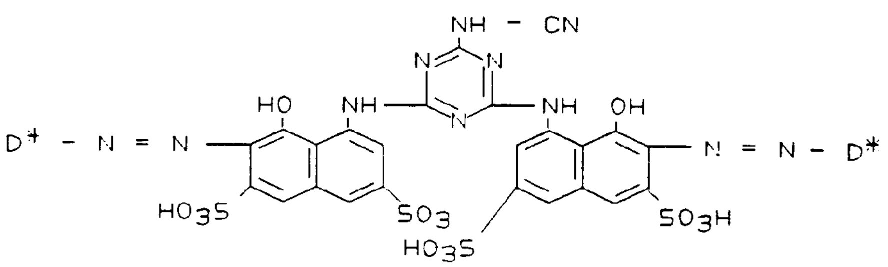

(B)

beschrieben. Sie lassen sich in erfindungsgemäßer Weise aus den aus dem jeweiligen Tabellenbeispiel in Verbindung mit Formel (B) ersichtlichen Ausgangskomponenten, beispielsweise analog den obigen Beispielen 1 bis 5, herstellen. Sie besitzen sehr gute faserreaktive Farbstoffeigenschaften und färben die in der Beschreibung genannten Materialien, insbesondere Cellulosefasermaterialien, nach den bekannten Applikations- und Fixierverfahren in farbstarken, echten, für das jeweilige Tabellenbeispiel angegebenen Tönen.

| Beispiel | Disazoverbindung (B) mit Rest D* | Farbton |
|---|---|---|
| 6 | 3-(ß-Sulfatoethylsulfonyl)-phenyl | rot (528) |
| 7 | 2-Carboxy-5-(ß-sulfatoethylsulfonyl)-phenyl | rot |
| 8 | 2-Ethoxy-5-(ß-sulfatoethylsulfonyl)-phenyl | blaustichig rot |

| Beispiel | Disazoverbindung (B) mit Rest D* | Farbton |
|---|---|---|
| 9 | 2-Methoxy-5-(β-sulfatoethylsulfonyl)-phenyl | blaustichig rot (518) |
| 10 | 4-Vinylsulfonyl-phenyl | rot (530) |
| 11 | 2,5-Dimethoxy-4-(β-sulfatoethyl)sulfonyl)-phenyl | blaustichig rot |
| 12 | 5-Methyl-2-methoxy-4-(β-sulfatoethyl-sulfonyl)-phenyl | rotstichig violett |
| 13 | 2,5-Dimethyl-4-(β-sulfatoethyl-sulfonyl)-phenyl | rotstichig violett |
| 14 | 2-Sulfo-4-(β-sulfatoethylsulfonyl)-phenyl | rot (510) |
| 15 | 4-[N-(3'-β-sulfatoethylsulfonyl)-phenyl]-amidocarbonyl-phenyl | rot |
| 16 | 2-Sulfo-5-(β-sulfatoethylsulfonyl)-phenyl | rot |
| 17 | 6-(β-Sulfatoethylethylsulfonyl)-naphth-2-yl | violett |
| 18 | 8-(β-Sulfatoethylsulfonyl)-6-sulfo-naphth-2-yl | blaustichig rot |
| 19 | 5-(β-Sulfatoethylsulfonyl)-naphth-1-yl | blaustichig rot |

**Beispiele 20 bis 33**

In den nachfolgenden Tabellenbeispielen sind weitere erfindungsgemäße Disazoverbindungen mit Hilfe der allgemeinen Formel (C)

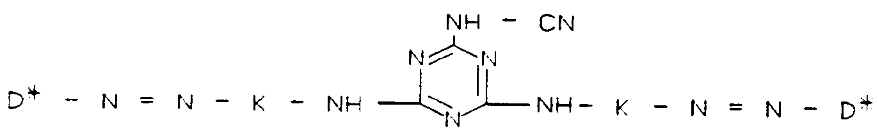

(C)

beschrieben. Sie lassen sich in erfindungsgemäßer Weise aus den aus dem jeweiligen Tabellenbeispiel in Verbindung mit Formel (C) ersichtlichen Ausgangskomponenten, beispielsweise analog einem der obigen Ausführungsbeispiele, herstellen. Sie besitzen sehr gute faserreaktive Farbstoffeigenschaften und färben in der Beschreibung genannten Materialien, insbesondere Cellulosefasermaterialien, nach den bekannten Applikations- und Fixierverfahren in farbstarken, echten, für das jeweilige Tabellenbeispiel angegebenen Tönen.

| Bsp. | Disazoverbindung der Formel (C) mit Rest D* | Komponente H-K-$NH_2$ | Farbton |
|---|---|---|---|
| 20 | 4-Vinylsulfonyl-phenyl | 1-Amino-4,6-disulfo-8-naphthol | rot |
| 21 | 3-(β-Sulfatoethyl-sulfonyl)-phenyl | dito | rot |
| 22 | 1-Sulfo-6-(β-sulfato-ethylsulfonyl)-naphth-2-yl | dito | rotstichig violett (528) |
| 23 | 2-Methoxy-5-(β-sulfato-ethylsulfonyl)-phenyl | dito | blaustichig rot |
| 24 | 2-Sulfo-5-(β-sulfato-ethylsulfonyl)-phenyl | dito | rot |
| 25 | 3-(β-Sulfatoethyl-sulfonyl)-phenyl | 2-Amino-6-sulfo-8-naphthol | orange |
| 26 | 2-Methoxy-5-(β-sulfato-ethylsulfonyl)-phenyl | dito | rotstichig braun |
| 27 | 6-Sulfo-8-(β-sulfato-ethylsulfonyl)-naphth-2-yl | dito | orange |
| 28 | 1-Sulfo-6-(β-sulfato-ethylsulfonyl)-naphth-2-yl | dito | orange (500) |
| 29 | 4-(β-Thiosulfatoethyl-sulfonyl)-phenyl | 3-Amino-6-sulfo-8-naphthol | orange |
| 30 | 4-(β-Sulfatoethyl-sulfonyl)-phenyl | dito | orange |

| Bsp. | Disazoverbindung der Formel (C) mit Rest D* | Komponente H-K-$NH_2$ | Farbton |
|---|---|---|---|
| 31 | 3-(β-Sulfatoethyl-sulfonyl)-phenyl | dito | orange |
| 32 | 6-Sulfo-8-(β-Sulfato-ethylsulfonyl)-naphth-2-yl | dito | orange |
| 33 | 2-Methoxy-5-(β-Sulfato-ethylsulfonyl)-phenyl | dito | rotstichig orange |

## Patentansprüche

1. Disazoverbindung entsprechend der allgemeinen Formel (1)

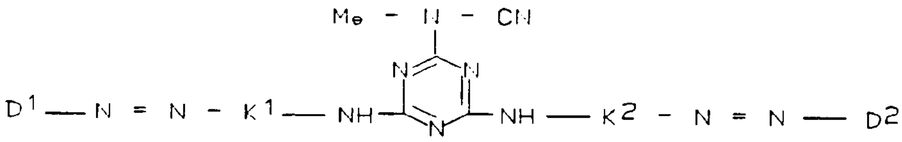

(1)

in welcher bedeuten:

Me ist Wasserstoff oder ein Alkalimetall;

$K^1$ ist ein Rest der allgemeinen Formel (2a)

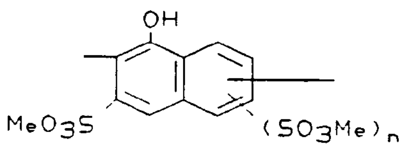

(2a)

in welcher

Me eine der oben angegebenen Bedeutungen hat und

n die Zahl Null oder 1 bedeutet (wobei im Falle von n gleich Null diese Gruppe Wasserstoff bedeutet);

$K^2$ ist ein Rest der allgemeinen Formel (2b)

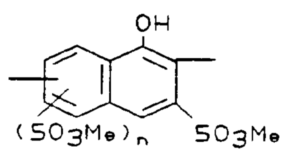

(2b)

in welcher Me und n eine der oben genannten Bedeutungen besitzt;

$D^1$ und $D^2$ sind unabhängig voneinander jedes eine Gruppe der allgemeinen Formel (3a), (3b) oder (3c)

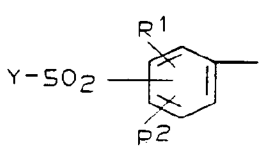

(3a)

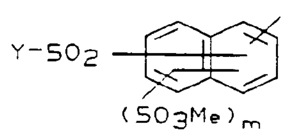

(3b)

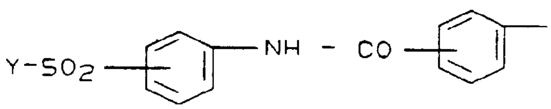

(3c)

in welchen

Me eine der oben genannten Bedeutungen besitzt,

$R^1$ Wasserstoff, Alkyl von 1 bis 4 C-Atomen, das durch Sulfo, Carboxy oder Sulfato substituiert sein kann, Alkoxy von 1 bis 4 C-Atomen, das durch Sulfo, Carboxy oder Sulfato substituiert sein kann, Chlor, Brom, Hydroxy, Cyano, Carboxy oder Sulfo ist,

$R^2$ Wasserstoff, Alkyl von 1 bis 4 C-Atomen oder Alkoxy von 1 bis 4 C-Atomen ist,

Y Vinyl ist oder Ethyl ist, das in β-Stellung einen Substituenten enthält, der durch Alkali unter Bildung der Vinylgruppe eliminierbar ist, und

m die Zahl Null, 1 oder 2 ist (wobei im Falle von m gleich Null diese Gruppe Wasserstoff bedeutet).

2. Disazoverbindung nach Anspruch 1, dadurch gekennzeichnet, daß $K^1$ und $K^2$ eine Gruppe gleicher Konstitution darstellen.

3. Disazoverbindung nach Anspruch 1 oder 2, dadurch gekennzeichnet, daß $D^1$ und $D^2$ die gleiche Bedeutungen haben.

4. Disazoverbindung nach mindestens einem der Ansprüche 1 bis 3, dadurch gekennzeichnet, daß in Formel (2a) und in Formel (2b) n für die Zahl 1 steht.

5. Disazoverbindung nach Anspruch 4, dadurch gekennzeichnet, das der Rest $-K^1-NH-$ ein Rest der allgemeinen Formel (4a) und der Rest $-NH-K^2-$ ein Rest der allgemeinen Formel (5a)

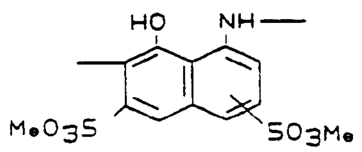

(4a)

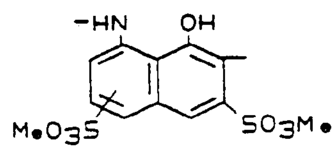

(5a)

mit Me der in Anspruch 1 genannten Bedeutung ist.

6. Disazoverbindung nach mindestens einem der Ansprüche 1 bis 5, dadurch gekennzeichnet, daß $D^1$ oder $D^2$ oder beide 4-(β-Sufatoethylsulfonyl)-phenyl sind.

7. Disazoverbindung nach mindestens einem der Ansprüche 1 bis 5, dadurch gekennzeichnet, daß $D^1$ oder $D^2$ oder beide 1-Sulfo-6-(β-sulfatoethylsulfonyl)-naphth-2-yl sind.

8. Disazoverbindung nach mindestens einem der Ansprüch 1 bis 5, dadurch gekennzeichnet, daß Y Vinyl, β-Thiosulfatoethyl, β-Chlorethyl oder bevorzugt β-Sulfatoethyl ist.

9. Verfahren zur Herstellung einer Verbindung der allgemeinen Formel (1) von Anspruch 1, dadurch gekennzeichnet, daß man eine Verbindung der allgemeinen Formel (6)

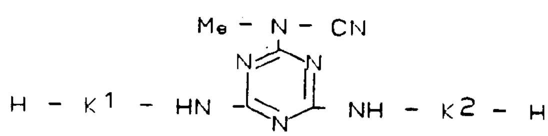

(6)

in welcher $K^1$, $K^2$ und Me die in Anspruch 1 genannten Bedeutungen haben, mit dem Diazoniumsalz der aromatischen Amine der allgemeinen Formeln $D^1-NH_2$ und $D^2-NH_2$, in welchen $D^1$ und $D^2$ die in Anspruch 1 angegebenen Bedeutungen haben und $D^1$ und $D^2$ zueinander gleich oder voneinander verschiedene Bedeutungen besitzen können, in äquivalenter Menge kuppelt, oder daß man eine Verbindung der allgemeinen Formel (7)

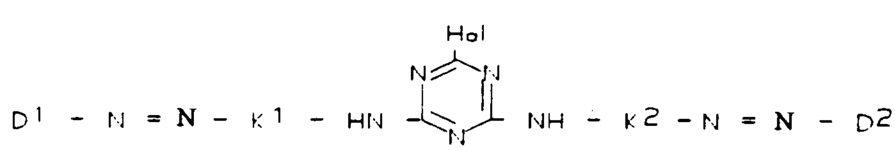

(7)

in welcher $D^1$, $D^2$, $K^1$ und $K^2$ die in Anspruch 1 genannten Bedeutungen haben und Hal für Halogen steht, mit Cyanamid oder einem Alkalimetallsalz des Cyanamids umsetzt.

**10.** Verwendung eines Farbstoffes von mindestens einem der Ansprüche 1 bis 8 zum Färben und Bedrucken von hydroxy- und/oder carbonamidgruppenhaltigem Material, insbesondere Fasermaterial.

**11.** Verfahren zum Färben und Bedrucken von hydroxy- und/oder carbonamidgruppenhaltigem Material, vorzugsweise Fasermaterial, bei welchem man einen Farbstoff auf das Material aufbringt oder in das Material einbringt und den Farbstoff auf oder in dem Material mittels Wärme oder mit Hilfe eines alkalisch wirkenden Mittels oder mittels Wärme und mit Hilfe eines alkalischen Mittels fixiert, dadurch gekennzeichnet, daß man als Farbstoff einen Farbstoff von mindestens einem der Ansprüche 1 bis 8 verwendet.

## Claims

**1.** A disazo compound conforming to the formula (1)

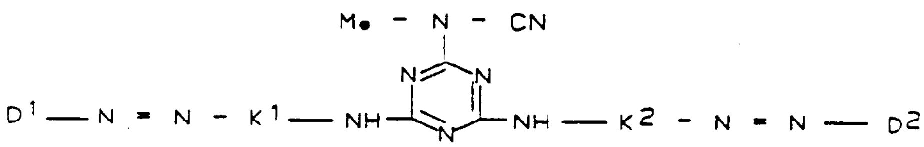

(1)

where

Me is hydrogen or an alkali metal;

$K^1$ is a radical of the formula (2a)

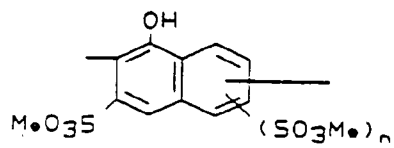

(2a)

where

Me has one of the abovementioned meanings and

n is zero or 1 (if zero, this group being hydrogen);

$K^2$ is a radical of the formula (2b)

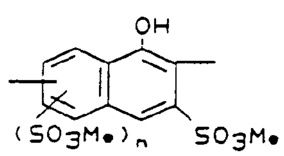

(2b)

where Me and n are each as defined above;

$D^1$ and $D^2$ are each independently of the other a group of the formula (3a), (3b) or (3c)

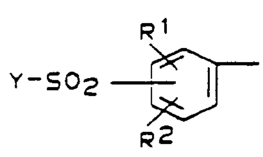

(3a)

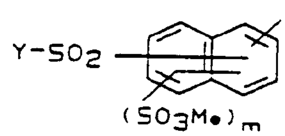

(3b)

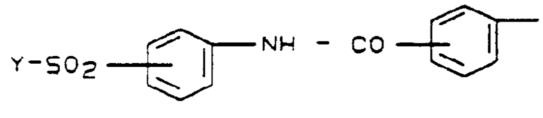

(3c)

where

Me has one of the abovementioned meanings,
$R^1$ is hydrogen, alkyl of from 1 to 4 carbon atoms, which may be sulfo-, carboxyl- or sulfato-substituted, alkoxy of from 1 to 4 carbon atoms, which may be sulfo-, carboxyl- or sulfato-substituted, chlorine, bromine, hydroxyl, cyano, carboxyl or sulfo,
$R^2$ is hydrogen, alkyl of from 1 to 4 carbon atoms or alkoxy of from 1 to 4 carbon atoms,
Y is vinyl or ethyl, each of which contains in β-position a substituent which is eliminable by alkali to form a vinyl group, and
m is zero, 1 or 2 (if zero, this group being hydrogen).

2. A disazo compound as claimed in claim 1, wherein $K^1$ and $K^2$ are groups of identical structure.

3. A disazo compound as claimed in claim 1 or 2, wherein $D^1$ and $D^2$ are identical.

4. A disazo compound as claimed in at least one of claims 1 to 3, wherein in the formula (2a) and in the formula (2b) n is 1.

5. A disazo compound as claimed in claim 4, wherein the radical $-K^1-NH-$ is a radical of the formula (4a) and the radical $-NH-K^2-$ is a radical of the formula (5a)

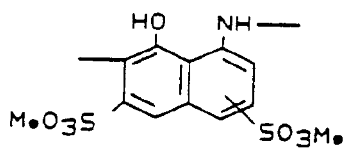

(4a)

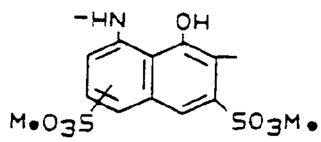

(5a)

where Me is as defined in claim 1.

6. A disazo compound as claimed in at least one of claims 1 to 5, wherein $D^1$ or $D^2$ or both are 4-(β-sulfatoethylsulfonyl)phenyl.

7. A disazo compound as claimed in at least one of claims 1 to 5, wherein $D^1$ or $D^2$ or both are 1-sulfo-6-(β-sulfatoethylsulfonyl)naphth-2-yl.

8. A disazo compound as claimed in at least one of claims 1 to 5, wherein Y is vinyl, β-thiosulfatoethyl, β-chloroethyl or preferably β-sulfatoethyl.

9. A process for preparing a compound of the formula (1) of claim 1, which comprises coupling a compound of the formula (6)

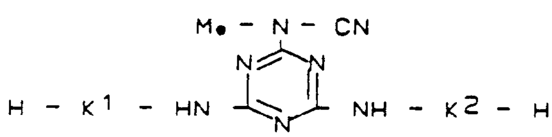

(6)

where $K^1$, $K^2$ and Me are each as defined in claim 1, with the diazonium salt of the aromatic amines of the formulae $D^1-NH_2$ and $D^2-NH_2$, where $D^1$ and $D^2$ are each as defined in claim 1 and may be identical to or different from each other, in equivalent amounts, or reacting a compound of the formula (7)

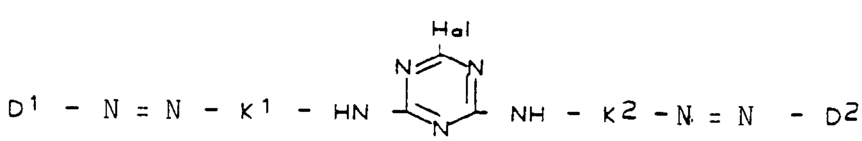

(7)

where $D^1$, $D^2$, $K^1$ and $K^2$ are each as defined in claim 1 and Hal is halogen, with cyanamide or an alkali

metal salt of cyanamide.

**10.** The use of a dye of at least one of claims 1 to 8, for dyeing and printing hydroxyl- and/or carboxamido-containing material, in particular fiber material.

**11.** A process for dyeing and printing hydroxyl- and/or carboxamido-containing material, preferably fiber material, in which a dye is applied to or introduced into the material and fixed thereon or therein by means of heat or with the aid of an alkaline agent or by means of heat and with the aid of an alkaline agent, which comprises using as the dye a dye of at least one of claims 1 to 8.

## Revendications

**1.** Composé disazoïque répondant à la formule générale (1)

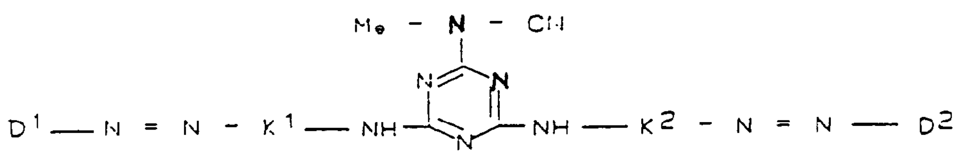

(1)

dans laquelle
Me désigne un atome d'hydrogène ou d'un métal alcalin ;
$K^1$ est un radical répondant à la formule générale (2a)

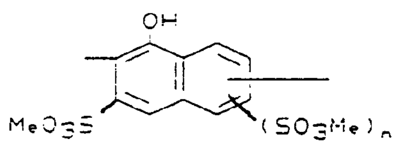

(2a)

dans laquelle
Me a une des significations indiquées ci-dessus et
n est 0 ou 1 (dans le cas où n est égal à 0, ce groupe désigne l'atome d'hydrogène)
$K^2$ est un radical répondant à la formule générale (2b)

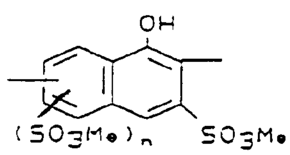

(2b)

dans laquelle
Me et n possèdent l'une des significations indiquées ci-dessus ;
$D^1$ et $D^2$ sont indépendamment l'un de l'autre chacun un groupe répondant aux formules générales (3a), (3b) ou (3c)

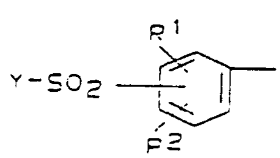

(3a)

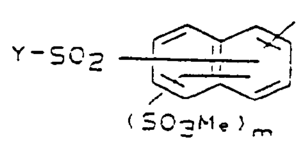

(3b)

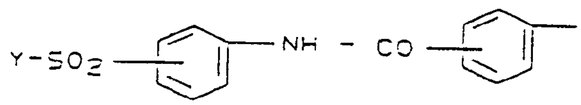

(3c)

dans lesquelles

Me possède une des significations indiquées ci-dessus

$R^1$ est un atome d'hydrogène, un groupe alkyle en $C_1$-$C_4$ qui peut être substitué par un groupe sulfo, carboxy ou sulfato, alcoxy en $C_1$-$C_4$ qui peut être substitué par un groupe sulfo, carboxy ou sulfato, un atome de chlore, de brome, un groupe hydroxy, cyano, carboxy ou sulfo ;

$R^2$ est un atome d'hydrogène, un groupe alkyle en $C_1$-$C_4$, ou un groupe alcoxy en $C_1$-$C_4$ ;

Y est un groupe vinyle ou éthyle qui contient à la position β un substituant éliminable par un alcali avec formation du groupe vinyle, et

m est 0, 1 ou 2 (ce groupe désignant l'atome d'hydrogène dans le cas où m est égal à zéro).

2. Composé diazoïque selon la revendication 1, caractérisé en ce que $K^1$ et $K^2$ représentent un groupe de même constitution.

3. Composé disazoïque selon les revendications 1 ou 2, caractérisé en ce que $D^1$ et $D^2$ ont les mêmes significations.

4. Composé disazoique selon au moins une des revendications 1 à 3, caractérisé en ce que dans la formule (2a) et dans la formule (2b), n représente le nombre 1.

5. Composé disazoïque selon la revendication 4, caractérisé en ce que le radical -$K^1$-NH- est un radical répondant à la formule générale (4a) et le radical -NH-$K^2$- est un radical répondant à la formule générale (5a)

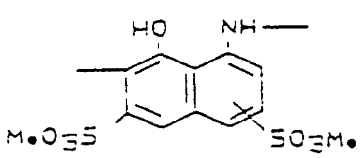

(4a)

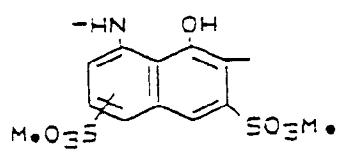

(5a)

Me ayant la signification indiquée dans la revendication 1.

6. Composé disazoïque selon au moins une des revendications 1 à 5, caractérisé en ce que $D^1$ ou $D^2$ ou les deux sont des groupes 4-(β-sulfatoéthylsulfonyl)-phényle.

7. Composé disazoïque selon au moins une des revendications 1 à 5, caractérisé en ce que $D^1$ ou $D^2$ ou les deux sont des groupes 1-sulfo-6-(β-sulfatoéthylsulfonyl)-napht-2-yle.

8. Composé disazoïque selon au moins une des revendications 1 à 5, caractérisé en ce que Y est un groupe vinyle, β-thiosulfatoéthyle, β-chloréthyle ou de préférence β-sulfatoéthyle.

9. Procédé de préparation d'un composé répondant à la formule générale (1) selon la revendication 1, caractérisé en ce qu'on copule un composé répondant à la formule générale (6)

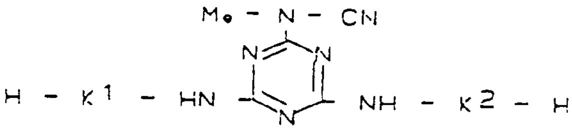

(6)

dans laquelle $K^1$, $K^2$ et Me ont les significations indiquées dans la revendication 1, avec le sel de diazonium des amines aromatiques répondant aux formules générales $D^1$-$NH_2$ et $D^2$-$NH_2$ dans lesquelles $D^1$ et $D^2$ ont les significations indiquées dans la revendication 1, et $D^1$ et $D^2$ peuvent posséder l'un par rapport à l'autre des significations identiques ou différentes l'une de l'autre, dans une quantité équivalente, ou en ce qu'on fait réagir un composé répondant à la formule (7)

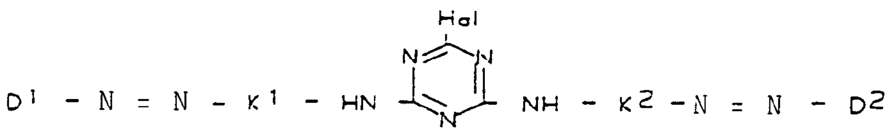

(7)

dans laquelle $D^1$, $D^2$, $K^1$ et $K^2$ ont les significations indiquées dans la revendication 1 et Hal représente un atome d'halogène, avec du cyanamide ou un sel de métal alcalin du cyanamide.

**10.** Utilisation d'un colorant selon au moins une des revendications 1 à 8 pour la teinture et l'impression d'une matière contenant des groupes hydroxy et/ou carbonamide, en particulier une matière fibreuse.

**11.** Procédé pour la teinture et l'impression d'une matière contenant des groupes hydroxy et/ou carbonamide, de préférence une matière fibreuse, dans lequel on applique un colorant sur la matière ou on l'introduit dans la matière et on fixe le colorant sur ou dans la matière par la chaleur ou à l'aide d'un agent à réaction alcaline ou par la chaleur et à l'aide d'un agent alcalin, caractérisé en ce qu'on utilise comme colorant un colorant selon au moins une des revendications 1 à 8.